# EUROPEAN PATENT APPLICATION

(11) **EP 4 708 439 A1**
(43) Date of publication of application: **11.03.2026**
(21) Application number: 24939550.0
(22) Date of filing: 30.12.2024
(51) Int. Cl.: H01M 10/0567

(54) **ADDITIVE COMPOSITION, ELECTROLYTE COMPRISING SAME, AND BATTERY**

(30) Priority: 23.05.2024 CN 202410648928
(71) Applicant: Guangzhou Tinci Materials Technology Co., Ltd, Guangzhou, Guangdong 510765 (CN)
(72) Inventor: YANG, Haidong, Guangzhou, Guangdong 510765 (CN); SONG, Xiaoyi, Guangzhou, Guangdong 510765 (CN); XIE, Tian, Guangzhou, Guangdong 510765 (CN)
(74) Representative: IPAZ
(86) International application number: PCT/CN2024/143796
(87) International publication number: WO 2025/241538

(57) **Abstract**

The present application provides an additive composition, as well as an electrolytic solution and a battery thereof, wherein the additive composition comprises a first additive and a second additive; the first additive comprises a compound having a structure represented by formula 1, and the second additive comprises a silane additive. The additive composition provided by the present application is able to improve the cycling performance and high-temperature performance of the battery when used in an electrolytic solution.

## Description

The present application claims the priority of Chinese Patent Application No. 202410648928.4, titled "ADDITIVE COMPOSITION AS WELL AS ELECTROLYTIC SOLUTION AND BATTERY THEREOF", filed before the China National Intellectual Property Administration on May 23, 2024, which is incorporated herein by reference in its entirety.

### TECHNICAL FILED

The present application relates to an additive composition, in particular to an additive composition as well as an electrolytic solution and a battery thereof, which involves the technical field of second battery.

### BACKGROUND

Lithium-ion batteries and sodium-ion batteries, as green conversion media between chemical energy and electrical energy, are widely used in 3C, power, energy storage and other fields due to their advantages of long cycle life, environmental sustainability, and no memory effect. There is a growing demand for the energy density of lithium-ion and sodium-ion batteries has gradually increased, making high-voltage, high-temperature and long-cycle systems important future directions for lithium-ion and sodium-ion batteries.

Currently, a common method of improving the electrochemical performance of lithium-ion and sodium-ion batteries is incorporating additive to the electrolytic solution. However, there are still some unsolved problems in the practical application of a single additive. For example, during operation, batteries are prone to problems such as gas generation at high temperatures, high internal resistance at room temperature and low temperatures, poor cycling performance, which degrade the cycling performance and high-temperature performance of batteries.

Therefore, there is an urgent need to develop an additive composition that can enhance the cycling performance and high-temperature performance of batteries.

### SUMMARY

The present application provides an additive composition that is able to improve the cycling performance and high-temperature performance of a battery when used in an electrolytic solution.

The present application provides an electrolytic solution that is able to improve the cycling performance and high-temperature performance of the battery.

The present application provides a battery having excellent cycling performance and high-temperature performance.

The present application provides an additive composition, including a first additive and a second additive; and the first additive includes a compound having a structure represented by formula 1: 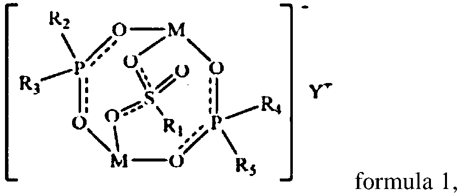
R₁ is selected from the group consisting of -R and -OR, and R is selected from the group consisting of substituted or unsubstituted C₁-C₇ alkyl, substituted or unsubstituted C₂-C₇ alkenyl, and substituted or unsubstituted C₂-C₆ alkynyl; R₂ to R₅ are each independently selected from the group consisting of halogen and substituted or unsubstituted C₁-C₆ alkyl; M is an alkali metal; and Y⁺ is a monovalent cation; and
the second additive includes a silane additive.

The silane additive includes unsaturated bond(s).

In the aforementioned additive composition, the second additive includes at least one of silane additive having a structure represented by formula 2, formula 3, or formula 4: 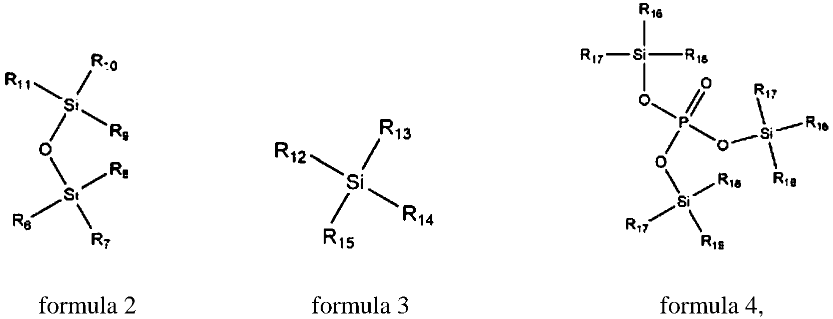
R₆ to R₁₁ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; substituent(s) in each of R₆ to R₁₁ includes one of halogen, amino, or hydroxyl, and the silane additive having the structure represented by formula 2 includes at least two degrees of unsaturation;
R₁₂ to R₁₅ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; substituent(s) in each of R₁₂ to R₁₅ includes one of halogen and hydroxyl, or the silane additive having the structure represented by formula 3 includes at least two degrees of unsaturation; and
R₁₆, R₁₇, and R₁₈ are each independently selected from the group consisting of vinyl, methoxyethyl, and substituted or unsubstituted C₁-C₅ alkyl, and the silane additive having the structure represented by formula 4 includes at least three degrees of unsaturation.

In the aforementioned additive composition, R₁ is selected from the group consisting of substituted or unsubstituted C₁-C₆ acyclic alkyl and substituted or unsubstituted C₂-C₆ acyclic alkenyl; R₂ to R₅ include at least one halogen; M is selected from the group consisting of Li, Na, and K; Y⁺ is N⁺RₐR_{b}R_{c}R_{d}, Rₐ to R_{d} are each independently selected from the group consisting of H, halogen, substituted or unsubstituted C₁-C₇ alkyl, substituted or unsubstituted C₂-C₇ alkenyl, and substituted or unsubstituted C₂-C₆ alkynyl, and Rₐ to R_{d} include at least one hydrogen.

In the aforementioned additive composition, R₁ is substituted or unsubstituted C₂-C₆ acyclic alkenyl; R₂ to R₅ are each independently halogen; M is Li; Y⁺ is N⁺RₐR_{b}R_{c}R_{d}, Rₐ is hydrogen, and R_{b} to R_{d} are each independently C₁-C₃ alkyl.

In the aforementioned additive composition, R₆ to R₁₁ include at least two carbon-carbon double bonds; and/or
R₁₂ to R₁₅ include at least two carbon-carbon double bonds; and/or
the silane additive having the structure represented by formula 4 includes at least three carbon-carbon double bonds.

In the aforementioned additive composition, the first additive includes a compound having a structure represented by formula 5 to formula 8:

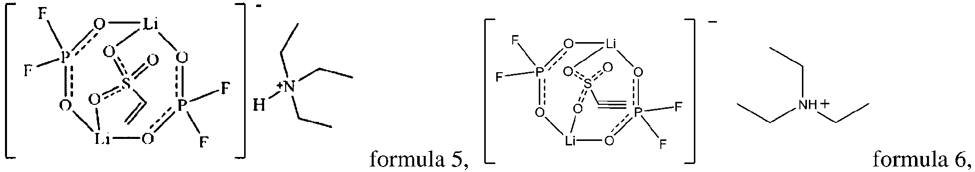

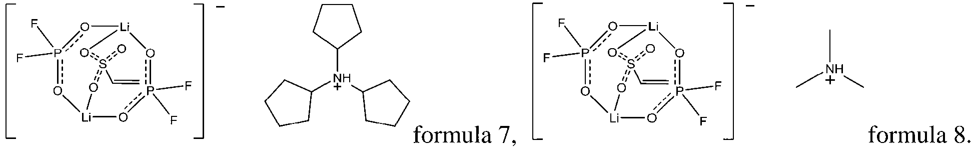

In the aforementioned additive composition, the silane additive having the structure represented by formula 2 includes at least one of tetramethyldivinyl disiloxane, dimethyltetravinyl disiloxane, 1,3-bis(fluoromethyl)-1,3-dimethyl-1,3-divinyldisiloxane, or 1,1,3,3-tetrakis(fluoromethyl)-1,3-divinyldisiloxane; and/or
the silane additive having the structure represented by formula 3 includes at least one of dimethyldivinylsilane, trivinylmethylsilane, or tetravinylsilane; and/or
the silane additive having the structure represented by formula 4 includes at least one of tris(dimethylvinylsilyl)phosphate, bis(dimethyl(vinyl)silyl) methyl phosphate, tris(ethoxydimethylsilyl) phosphate, bis(ethoxydimethylsilyl) methyl phosphate, tetrakis(dimethyl(vinyl)silyl) diphosphate, or tetrakis((2-methoxyethyl)dimethylsilyl) diphosphate.

The present application provides an electrolytic solution, including a lithium salt or a sodium salt, an organic solvent, and the aforementioned additive composition.

In the aforementioned electrolytic solution, a mass percentage of the first additive in the electrolytic solution ranges from 0.1% to 3%; and/or
a mass percentage of the second additive in the electrolytic solution ranges from 0.03% to 3%.

In the aforementioned electrolytic solution, the second additive includes the silane additives having the structures represented by formula 2 and formula 3, and a mass ratio between the silane additives having the structures represented by formula 2 and formula 3 is (1.5 to 2.0):1; and/or
the second additive includes the silane additives having the structures represented by formula 2 and formula 4, and a mass ratio between the silane additives having the structures represented by formula 2 and formula 4 is (0.5 to 1.5):1; and/or
the second additive includes the silane additives having the structures represented by formula 3 and formula 4, and a mass ratio between the silane additives having the structures represented by formula 3 and formula 4 is (0.5 to 1.5):1; and/or
the second additive includes the silane additives having the structures represented by formula 2, formula 3 and formula 4, and a mass ratio between the silane additives having the structures represented by formula 2, formula 3 and formula 4 is (0.5 to 1.5):(0.5 to 1.5):1.

In the aforementioned electrolytic solution, the electrolytic solution further includes an auxiliary additive, and the auxiliary additive includes at least one of 1,3-propane sultone, fluoroethylene carbonate, vinylene carbonate, prop-1-ene-1,3-sultone, tris(trimethylsilyl)phosphate, tris(trimethylsilyl)borate, ethylene sulfate, lithium difluorobis(oxalato)phosphate, lithium difluorophosphate, lithium difluoro(oxalato)borate, or ethylene sulfite; and
a mass percentage of the auxiliary additive in the electrolytic solution ranges from 0.03% to 3.2%.

The present application further provides a battery including the aforementioned electrolytic solution.

In the aforementioned battery, the battery further includes a positive electrode active substance and a negative electrode active substance, the positive electrode active substance includes at least one of lithium cobaltate, lithium iron phosphate or ternary material; or the positive electrode active substance includes at least one of a layered oxide, Prussian white, Prussian blue, or a polyanionic material; and
the negative electrode active substance includes at least one of artificial graphite, natural graphite, soft carbon, hard carbon, mesocarbon microbead, silicon-based material, tin-based material, or lithium titanate.

In the present application, the compound having the structural formula represented by formula 1 is combined with a silane additive and applied in an electrolytic solution, which allows the two components to work synergistically. This generates an SEI membrane with an abundance of inorganic-organic structures, reduces the impedance of the battery, and thus improves the cycling performance and high-temperature performance of the battery.

The electrolytic solution of the present application includes the aforementioned additive composition, and is able to improve the cycling performance and high-temperature performance of the battery.

The battery of the present application is prepared from the aforementioned electrolytic solution, and exhibits excellent cycling performance and high-temperature performance.

### DETAILED DESCRIPTION

In order to make the objects, technical solutions and advantages of the present application clearer, the technical solutions in the examples of the present application will be described clearly and completely in the following in combination with the examples of the present application. It is obvious that the examples described are a part of the examples of the present application and not all of them. Based on the examples in this application, all other examples obtained by those of ordinary skill in the art without creative work shall fall within the protection scope of this application.

The present application provides an additive composition, including a first additive and a second additive; the first additive includes a compound having a structure represented by formula 1: 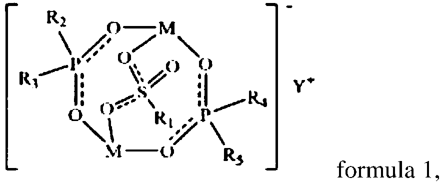
R₁ is selected from the group consisting of -R and -OR, and R is selected from the group consisting of substituted or unsubstituted C₁-C₇ alkyl, substituted or unsubstituted C₂-C₇ alkenyl, and substituted or unsubstituted C₂-C₆ alkynyl; R₂ to R₅ are each independently selected from the group consisting of halogen and substituted or unsubstituted C₁-C₆ alkyl; M is an alkali metal; and Y⁺ is a monovalent cation; and
the second additive includes a silane additive.

The additive composition of the present application includes a first additive and a second additive, the first additive is a compound having a structure represented by formula 1, and the second additive includes a silane additive. In the present application, R₁ is selected from the group consisting of -R and -OR, and R is selected from the group consisting of substituted or unsubstituted C₁-C₇ alkyl, substituted or unsubstituted C₂-C₇ alkenyl, and substituted or unsubstituted C₂-C₆ alkynyl; the substituted or unsubstituted C₁-C₇ alkyl refers to an acyclic alkyl with 1 to 7 carbon atoms that has substituent(s) or is unsubstituted, or a cycloalkyl with 3 to 7 carbon atoms that has substituent(s) or is unsubstituted; the substituted or unsubstituted C₂-C₇ alkenyl of the present application refers to an acyclic alkenyl with 2 to 7 carbon atoms that has substituent(s) or is unsubstituted, or a cycloalkenyl with 3 to 7 carbon atoms that has substituent(s) or is unsubstituted; the substituted or unsubstituted C₂-C₆ alkynyl of the present application refers to an acyclic alkynyl with 2 to 6 carbon atoms that has substituent(s) or is unsubstituted, or a cycloalkynyl with 3 to 6 carbon atoms that has substituent(s) or is unsubstituted; when specifying a hydrocarbon group with a specific carbon number, all geometrical isomers of the hydrocarbon group with this carbon number are included. In the present application, the type of substituent is not limited and can be selected as needed. For example, the substituent may be selected from the group consisting of halogen, cyano, nitro, amino, carboxyl, hydroxyl, mercapto, formyl, phosphoric acid group, and the like. That is, R₁ may be selected from the group consisting of -CH₃, -CH₂CH₃, -CF₃, -CH=CH₂, -CH=CF₂, -CH≡C-CH₃, -C≡C-CF₃, -OCH₃, -OCH₂CH₃, -OCF₃, -OCH=CH₂, -OCH=CF₂, -OCHC≡CH₃, -OC≡C-CF₃, -CH₂CH₂OH, -CH₂CH₂NH₂ and the like.

In the present application, R₂ to R₅ are each independently selected from the group consisting of halogen and substituted or unsubstituted C₁-C₆ alkyl; the substituted or unsubstituted C₁-C₆ alkyl refers to an acyclic alkyl with 1 to 6 carbon atoms that has substituent(s) or is unsubstituted, or a cycloalkyl with 3 to 7 carbon atoms that has substituent(s) or is unsubstituted. When specifying a hydrocarbon group with a specific carbon number, all geometrical isomers of the hydrocarbon group with that carbon number are included. In the present application, the type of substituent is not limited and can be selected as needed. That is, R₂ to R₅ can be selected from the group consisting of -CH₃, -CH₂CH₃, -CF₃, -CH₂CH₂OH, -CH₂CH₂NH₂, -CH₂CH₂NO₂, -F, -Cl, -Br, and the like. In the present application, M is an alkali metal, i.e., M can be selected from the group consisting of lithium (Li), sodium (Na), potassium (K), rubidium (Rb), cesium (Cs) and francium (Fr).

According to the above embodiments provided by the present application, by applying the additive composition to an electrolytic solution based on the above embodiments of the present application, the resulting electrolytic solution enables the battery to exhibit excellent cycling performance and high-temperature performance. The applicant has analyzed its principle and believes that the reason is likely the combined use of the compound with the structural formula of formula 1 and the silane additive. In this way, they works synthetically, generates a more structurally stable SEI membrane with lower impedance, which can protect the negative electrode and prevent side reactions between the electrolytic solution and the negative electrode, and consequently improves cycling performance and high-temperature performance of the battery.

In a specific embodiment, the silane additive includes unsaturated bond(s). In the present application, the unsaturated bond refers to a covalent bond formed by sharing more than one pair of electrons between atoms, such as carbon-carbon double bond, carbon-oxygen double bond, carbon-nitrogen double bond, and the like. When the silane additive includes unsaturated bond(s), the silane additive can more easily participate in the construction of the SEI membrane. Thus it is easier to generate a dense and stable SEI membrane with low impedance, thereby improving the cycling performance and high temperature performance of the battery.

In a specific embodiment, the second additive includes at least one of silane additive having a structure represented by formula 2, formula 3, or formula 4: 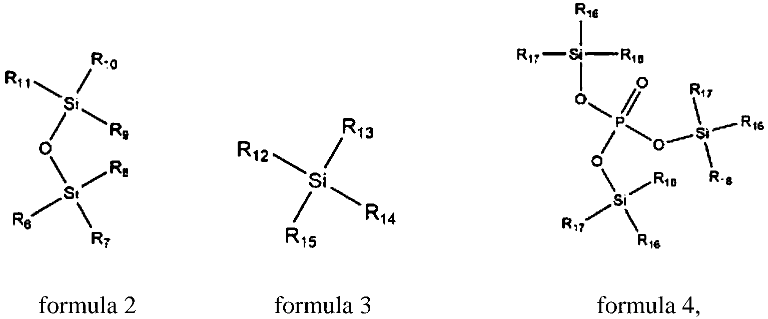
R₆ to R₁₁ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; substituent(s) in each of R₆ to R₁₁ includes one of halogen, amino, or hydroxyl, and the silane additive having the structure represented by formula 2 includes at least two degrees of unsaturation;
R₁₂ to R₁₅ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; substituent(s) in each of R₁₂ to R₁₅ includes one of halogen or hydroxyl, and the silane additive having the structure represented by formula 3 includes at least two degrees of unsaturation; and
R₁₆, R₁₇, and R₁₈ are each independently selected from the group consisting of vinyl, methoxyethyl, and substituted or unsubstituted C₁-C₅ alkyl, and the silane additive having the structure represented by formula 4 includes at least three degrees of unsaturation.

In the present application, R₆ to R₁₁ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; substituent(s) in each of R₆ to R₁₁ includes one of halogen, amino, or hydroxyl. In the present application, the substituted or unsubstituted C₁-C₁₂ alkyl refers to an acyclic alkyl with 1 to 12 carbon atoms that has substituent(s) or is unsubstituted, or a cycloalkyl with 3 to 12 carbon atoms that has substituent(s) or is unsubstituted; the substituted or unsubstituted C₂-C₁₂ alkenyl of the present application refers to an acyclic alkenyl with 2 to 12 carbon atoms that has substituent(s) or is unsubstituted, or a cycloalkenyl with 3 to 12 carbon atoms that has substituent(s) or is unsubstituted; the substituted or unsubstituted C₂-C₁₂ alkynyl of the present application refers to an acyclic alkynyl with 2 to 12 carbon atoms that has substituent(s) or is unsubstituted, or a cycloalkynyl with 3 to 12 carbon atoms that has substituent(s) or is unsubstituted; the substituted or unsubstituted C₁-C₁₂ alkoxy of the present application refers to an alkoxy with 1 to 12 carbon atom that has substituent(s) or is unsubstituted; the substituted or unsubstituted C₆-C₁₂ aryl of the present application refers to an aryl with 6 to 12 carbon atoms that has substituent(s) or is unsubstituted; the substituted or unsubstituted C₆-C₁₂ aryloxy of the present application refers to an aryloxy with 6 to 12 carbon atoms that has substituent(s) or is unsubstituted; and the substituent of the present application includes one of halogen, amino, and hydroxyl. When specifying a hydrocarbon group with a specific carbon number, all geometrical isomers of the hydrocarbon group with that carbon number are included. For example, R₆ to R₁₁ may be each independently selected from the group consisting of -CH₃, -CH₂CH₃, -CF₃, -CH=CH₂, -CH=CF₂, -CH≡C-CH₃, -C≡C-CF₃, -OCH₃, -OCH₂CH₃, -OCF₃, -C₆H₅, -CH₂-C₆H₅, -OC₆H₅, -OCH₂C₆H₅, -CCl₃, -CH₂CH₂NH₂, -CH₂CH₂OH, and the like. In the present application, the silane additive having the structure represented by formula 2 includes at least two degrees of unsaturation, e.g., the silane additive of formula 2 includes at least two carbon-carbon double bonds, or at least one carbon-carbon triple bond, or at least one phenyl, and the like.

In the present application, R₁₂ to R₁₅ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; substituent(s) in each of R₁₂ to R₁₅ includes one of halogen or hydroxyl, and the silane additive having the structure represented by formula 3 includes at least two degrees of unsaturation. In the present application, the substituted or unsubstituted C₁-C₁₂ alkyl refers to an acyclic alkyl with 1 to 12 carbon atoms that has substituent(s) or is unsubstituted, or a cycloalkyl with 3 to 12 carbon atoms that has substituent(s) or is unsubstituted; the substituted or unsubstituted C₂-C₁₂ alkenyl of the present application refers to an acyclic alkenyl with 2 to 12 carbon atoms that has substituent(s) or is unsubstituted, or a cycloalkenyl with 3 to 12 carbon atoms that has substituent(s) or is unsubstituted; the substituted or unsubstituted C₂-C₁₂ alkynyl of the present application refers to an acyclic alkynyl with 2 to 12 carbon atoms that has substituent(s) or is unsubstituted, or a cycloalkynyl with 3 to 12 carbon atoms that has substituent(s) or is unsubstituted; the substituted or unsubstituted C₁-C₁₂ alkoxy of the present application refers to an alkoxy with 1 to 12 carbon atom that has substituent(s) or is unsubstituted; the substituted or unsubstituted C₆-C₁₂ aryl of the present application refers to an aryl with 6 to 12 carbon atoms that has substituent(s) or is unsubstituted; the substituted or unsubstituted C₆-C₁₂ aryloxy of the present application refers to an aryloxy with 6 to 12 carbon atoms that has substituent(s) or is unsubstituted; and the substituent of the present application includes one of halogen, amino, and hydroxyl, e.g., the substituent can be selected from the group consisting of fluoro, chloro, bromo, iodo, and hydroxyl. When specifying a hydrocarbon group with a specific carbon number, all geometrical isomers of the hydrocarbon group with that carbon number are included. For example, R₁₂ to R₁₅ may be each independently selected from the group consisting of -CH₃, -CH₂CH₃, -CF₃, -CH=CH₂, -CH=CF₂, -CH≡C-CH₃, -C≡C-CF₃, -OCH₃, -OCH₂CH₃, -OCF₃, -C₆H₅, -CH₂-C₆H₅, -OC₆H₅, -OCH₂C₆H₅, -CH₂CH₂OH, and the like. In the present application, the silane additive having the structure represented by formula 3 includes at least two degrees of unsaturation, e.g., the silane additive of formula 3 includes at least two carbon-carbon double bonds, or at least one carbon-carbon triple bond, or at least one phenyl, and the like.

In the present application, R₁₆, R₁₇, and R₁₈ are each independently selected from the group consisting of vinyl, methoxyethyl, and substituted or unsubstituted C₁-C₅ alkyl, and the silane additive having the structure represented by formula 4 includes at least three degrees of unsaturation. The substituted or unsubstituted C₁-C₅ alkyl of the present application refers to an acyclic alkyl with 1 to 5 carbon atoms that has substituent(s) or is unsubstituted, or a cycloalkyl with 3 to 5 carbon atoms that has substituent(s) or is unsubstituted. In the present application, the type of substituent is not limited and can be selected as needed. When specifying a hydrocarbon group with a specific carbon number, all geometrical isomers of the hydrocarbon group with that carbon number are included. For example, R₁₆, R₁₇, and R₁₈ can be each independently selected from the group consisting of -CH₃, -CH₂CH₃, -CF₃, -CH₂CH₂OH, -CH₂CH₂NH₂, -CH=CH₂, -CH₂CH₂OCH₃, and the like.

According to the above embodiments provided by the present application, when the second additive includes at least one of the compounds of formula 2, formula 3, and formula 4, this lithium ion battery can exhibit excellent cycling performance and high-temperature performance. The applicant has analyzed its principle and believes that the reason may be that the silane additive with the structural formula of formula 2 may react with the trace water and HF in the electrolytic solution. This could inhibit the decomposition the electrolytic solution caused by the trace water and HF and improve the stability of the electrolytic solution, thereby inhibiting the gas generation problem of the battery. The silane additive with the structural formula of formula 3 includes at least two degrees of unsaturation, enabling it to form a network or a three-dimensional cross linking. This leads to a formation of a denser, more stable SEI membrane on the electrode surface, preventing lithium ions from entering the interior of the negative electrode and improving the cycling performance of the battery. Besides, it also avoids side reactions between the electrolytic solution and the positive and negative electrodes, inhibits gas generation and improves the high-temperature performance of the battery. The silane additive with the structural formula of formula 4 can reduce the acidity of the electrolytic solution. It also prevents the destruction of the active materials in the positive and negative electrodes by acidic substances in the electrolytic solution, as well as the accelerated decomposition of the electrolytic solution. Consequently, the gas generation at high temperatures in the battery is suppressed. And the SEI membrane formed by the participation of the silane additive with the structural formula of formula 4 has a special P-O-Si structure, which facilitates the removal of peroxide ions in the electrolytic solution. However, the second additive shares a common feature that the organic-rich SEI membrane it formed through Si-O, C=C or P-O-Si bond is too dense, leading to high impedance in the overall battery. To modify the SEI membrane formed by the second additive, the first additive is introduced. The first additive has a lower LUMO energy level and is more easily reduced before the solvent. Its SEI membrane-forming potential occurs earlier than that of the second additive and it can form an inorganic-dominated SEI interface rich in sulfate and phosphate with good homogeneity before the second additive. The second additive can then form a film on the inorganic-rich SEI membrane formed by the first additive, yielding an inorganic-organic layer. The thickness of this inorganic-organic layer is uniform and moderate, thereby reducing the impedance of the battery. That is to say, the combined use of the compound with the structural formula of formula 1 and at least one of the silane additives with the structural formula of formula 2, formula 3 and formula 4, enabling them to work synergistically to prevent lithium ions from entering the interior of the negative electrode, thereby improving the capacity retention rate of the battery and contributing to the cycling performance of the battery. Compared with an SEI membrane formed using a single additive, this SEI membrane has a more stable structure and lower impedance. Thus, the side reactions between the electrolytic solution and the negative electrode are avoided, and the cycling performance and high-temperature performance of the battery can be improved.

In a specific embodiment, R₁ is selected from the group consisting of substituted or unsubstituted C₁-C₆ acyclic alkyl and substituted or unsubstituted C₂-C₆ acyclic alkenyl; R₂ to R₅ include at least one halogen; M is selected from the group consisting of Li, Na, and K; Y⁺ is N⁺R^{a}R_{b}R_{c}R_{d}, Rₐ to R_{d} are each independently selected from the group consisting of H, halogen, substituted or unsubstituted C₁-C₇ alkyl, substituted or unsubstituted C₂-C₇ alkenyl, and substituted or unsubstituted C₂-C₆ alkynyl, and Rₐ to R_{d} include at least one hydrogen.

In the present application, the expression "Rₐ to R_{d} include at least one hydrogen" means at least one of Rₐ to R_{d} is hydrogen atom, and the remaining three functional groups are each independently selected from the group consisting of halogen, substituted or unsubstituted C₁-C₇ alkyl, substituted or unsubstituted C₂-C₇ alkenyl, and substituted or unsubstituted C₂-C₆ alkynyl.

When the first additive includes the compound represented by the aforementioned structural formulae, a superior synergistic effect occurs between the first and second additives, generating a more uniform SEI membrane with lower impedance. This further reduces the impedance of the battery, thus enhancing the cycling performance of the battery to a greater extent.

In a specific embodiment, R₁ is substituted or unsubstituted C₂-C₆ acyclic alkenyl; R₂ to R₅ are each independently halogen; M is Li; Y⁺ is N⁺RₐR_{b}R_{c}R_{d}, Rₐ is hydrogen, and R_{b} to R_{d} are each independently C₁-C₃ alkyl. When the first additive contains enabling them to workthe compound represented by the aforementioned structural formula, an SEI membrane with an improved lithium-conducting performance and a more stable structure can be formed, which results in better cycling performance of the battery.

In a specific embodiment, R₆ to R₁₁ include at least two carbon-carbon double bonds. When the second additive includes the silane additive of formula 2 with the above structural formula, the carbon-carbon double bond in the silane additive of formula 2 can enhance its reducing ability, thereby improving its thermal stability and that of the electrolytic solution to a greater extent. After combining with the first additive, the silane additive of formula 2 can work more synergistically with the first additive, forming an SEI membrane with more stable structure and lower-resistance, thereby enabling the battery to exhibit better high-temperature performance.

In a specific embodiment, R₁₂ to R₁₅ include at least two carbon-carbon double bonds. When the silane additive of formula 3 has the above structure, it can form a more stable reticular or three-dimensional cross-linking, thereby participating into the construction of a denser and more stable SEI membrane. Thus, it prevents lithium ions from entering the interior of the negative electrode to a greater extent, and reduces gas generation in the electrolytic solution. Besides, it can exert better synergistic effect with the first additive, leading to improved cycling performance and high-temperature performance of the battery.

In a specific embodiment, the silane additive having the structure represented by formula 4 includes at least three carbon-carbon double bonds. When the silane additive of formula 4 has the aforementioned structure, it can further reduce the acidity of the electrolytic solution, inhibit high-temperature gas generation in the battery to a greater extent. It can also improve the high-temperature performance of the battery, and remove lithium oxides and peroxide ions from the electrolytic solution to a greater extent. Further, it can also synergize better with the additive of formula 1, enhancing the cycling performance and high-temperature performance of the battery.

In a specific embodiment, the first additive includes a compound having a structure represented by formula 5 to formula 8:

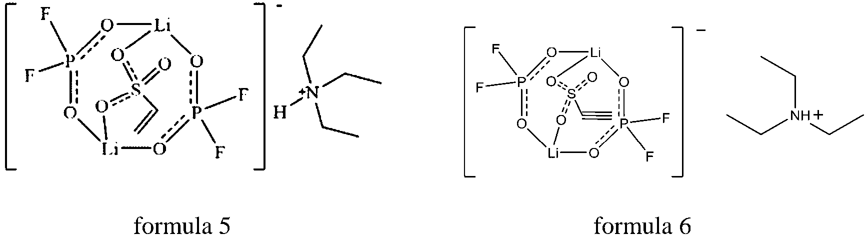

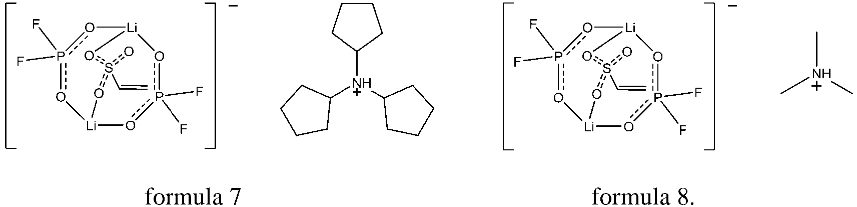

When the first additive includes at least one of the compounds having a structure represented by formula 5 to formula 8, it can dissociate in water to form a nitrogen-containing cationic group and an anion containing lithium difluorophosphate and ethylene sulfate. The nitrogen-containing cationic group can adjust the pH of the electrolytic solution and improve the conductivity. Moreover, the dissociation increases the number of free lithium ions in the solution, thereby improving the cycling performance of the battery. When R₂, R₃, R₄ and R₅ are F atoms, a difluorophosphoric acid group is introduced. Also, esters of the difluorophosphoric acid group has an impedance-lowering effect that can further improve the performance of the compounds having the structure represented by formula 5 to formula 8 in lowering the impedance of the battery. Consequently, a further better synergistic effect can be occurred between the first additive and the second additive to generate an SEI membrane and a CEI membrane with lower impedance and a more uniform structure, thereby further improving the cycling performance and high-temperature performance of the battery.

When the first additive includes a compound having the structural formula of formula 5, since triethylamine salt, being a salt of a strong base and a weak acid, has ionic properties and can be dissociated in water into triethylamine and an anion containing lithium difluorophosphate and ethylene sulfate. Such property makes the triethylamine salt have the effect of adjusting the acidity and alkalinity of the electrolytic solution and improving the conductivity, and the dissociation increases free lithium ions in the solution, which is able to improve the cycling performance of the battery. When R₂, R₃, R₄ and R₅ are F atoms, a difluorophosphoric acid group is introduced. Also, esters of the difluorophosphoric acid group has an impedance-lowering effect that can further improve the performance of the compound having the structural formula of formula 5 in lowering the impedance of the battery. Consequently, a further better synergistic effect can be occurred between the compound having the structural formula of formula 5 and the second additive to generate an SEI membrane and a CEI membrane with lower impedance and a more uniform structure, thereby further improving the cycling performance and high-temperature performance of the battery.

In a specific embodiment, the silane additive having the structure represented by formula 2 includes at least one of tetramethyldivinyl disiloxane, dimethyltetravinyl disiloxane, 1,3-bis(fluoromethyl)-1,3-dimethyl-1,3-divinyldisiloxane, or 1,1,3,3-tetrakis(fluoromethyl)-1,3-divinyldisiloxane. Selecting the silane additive having the structure represented by formula 2 from those described above results in a higher thermal stability of the silane additive. This enhances the thermal stability of the electrolytic solution, avoids gas generation problem in the battery and improves the high-temperature performance of the battery. At the same time, it can be used in combination with the first additive to generate lower impedance and a denser, more uniform SEI membrane, which further enhances the cycling performance of the battery.

In a specific embodiment, the silane additive having the structure represented by formula 3 includes at least one of dimethyldivinylsilane, trivinylmethylsilane, or tetravinylsilane. When the silane additive having the structure represented by formula 3 is selected from the above compounds, it can be matched with the compounds represented by formulae 1 and 2 to form an SEI membrane with lower impedance, greater density and uniformity, as well as a CEI membrane with better performance. Consequently, side reactions due to the contact between positive and negative electrodes and electrolytic solution are inhibited to a greater extent, which further enhances the cycling performance and high-temperature performance of the battery.

In a specific embodiment, the silane additive having the structure represented by formula 4 includes at least one of tris(dimethylvinylsilyl)phosphate, bis(dimethyl(vinyl)silyl) methyl phosphate, tris(ethoxydimethylsilyl) phosphate, bis(ethoxydimethylsilyl) methyl phosphate, tetrakis(dimethyl(vinyl)silyl) diphosphate, or tetrakis((2-methoxyethyl)dimethylsilyl) diphosphate. When the silane additive having the structure represented by formula 4 is selected from the above compounds, it can combine more effectively with hydrofluoric acid in the electrolytic solution, reducing the acidity of the electrolytic solution to a greater extent. This further avoids the influence of hydrofluoric acid on the positive and negative electrode active substances and the electrolytic solution, and also inhibites gas generation in the battery. Consequently, it enhances high-temperature performance of the battery and enables the formation of a SEI membrane and a CEI membrane with improved lithium-conducting performance, improving the cycling performance of the battery.

The present application provides an electrolytic solution, including a lithium salt or a sodium salt, an organic solvent, and the aforementioned additive composition.

When applied in a lithium-ion battery, the electrolytic solution of the present application includes a lithium salt and an organic solvent, the lithium salt is not specifically limited in the present application and can be those commonly used in the art, such as lithium hexafluorophosphate, lithium bisfluorosulfonimide, lithium tetrafluoroborate, lithium difluoro(oxalato)borate, and the like. When applied in a sodium-ion battery, the electrolytic solution of the present application includes a sodium salt and an organic solvent, the sodium salt can be those commonly used in the art, such as sodium hexafluorophosphate, sodium perchlorate, sodium bisfluorosulfonimide, and the like. The organic solvent is used for dissolving the lithium or sodium salt to produce an electrolytic solution with good conductivity. It is not specifically limited in the present application may be a solvent commonly used in the art, such as a carbonate, a carboxylate, an ether, and the like.

When including the aforementioned additive composition, the electrolytic solution is able to improve the cycling performance and high-temperature performance of the battery.

In a specific embodiment, a mass percentage of the first additive in the electrolytic solution ranges from 0.1% to 3%, e.g., 0.1%, 0.25%, 0.5%, 0.75%, 1%, 1.25%, 1.5%, 1.75%, 2%, 2.25%, 2.5%, 2.75%, 3%, and the like; and/or, a mass percentage of the second additive in the electrolytic solution ranges from 0.03% to 3%, e.g., 0.03%, 0.05%, 0.1%, 0.25%, 0.5%, 0.75%, 1%, 1.25%, 1.5%, 1.75%, 2%, 2.25%, 2.5%, 2.75%, 3%, and the like. When the mass percentages of the first additive and the second additive are within the above ranges, the first additive and the second additive can exhibit further synergistic effect to form an SEI membrane with lower impedance and a more stable structure. This avoids side reactions between the electrolytic solution and negative electrode, improving the cycling performance of the battery, and inhibiting gas generation of the battery to a greater extent, thus improving the high-temperature performance of the battery.

In a specific embodiment, the second additive includes the silane additives having the structure represented by formula 2 and formula 3, and a mass ratio between the silane additives having the structure represented by formula 2 and formula 3 is (1.5 to 2.0):1; for example, the mass ratio between the silane additives having the structure represented by formula 2 and formula 3 is 1.5:1, 1.6:1, 1.7:1, 1.8:1, 1.9:1, 2.0:1, and the like. When the second additive includes the silane additives having the structure represented by formula 2 and formula 3 with a mass ratio in the range as defined above, the compounds of formula 1, formula 2 and formula 3 can exhibit further synergistic effect to improve the lithium-conducting performance of the generated SEI membrane, reducing the impedance and improving the cycling performance of the battery. At the same time, the thermal stability of the electrolytic solution is enhanced, such that the high-temperature performance of the battery is improved, and a CEI membrane with better properties can also be generated, thereby further improving the cycling performance of the battery.

In a specific embodiment, the second additive includes the silane additives having the structure represented by formula 2 and formula 4, and a mass ratio between the silane additives having the structure represented by formula 2 and formula 4 is (0.5 to 1.5):1; for example, the mass ratio between the silane additives having the structure represented by formula 2 and formula 4 is 0.5:1, 0.6:1, 0.7:1, 0.8:1, 0.9:1, 1.0:1, 1.1:1, 1.2:1, 1.3:1, 1.4:1, 1.5:1, and the like. When the second additive includes the silane additives having the structure represented by formula 2 and formula 4 with a mass ratio in the range as defined above, the compounds of formula 1, formula 2 and formula 4 can exhibit further synergistic effect to improve the lithium-conducting performance of the generated SEI membrane and CEI membrane. At the same time, the thermal stability of the electrolytic solution is enhanced, and the acidity of the battery is reduced, such that the cycling performance and high-temperature performance of the battery is further improved.

In a specific embodiment, the second additive includes the silane additives having the structure represented by formula 3 and formula 4, and a mass ratio between the silane additives having the structure represented by formula 3 and formula 4 is (0.5 to 1.5):1; for example, the mass ratio between the silane additives having the structure represented by formula 3 and formula 4 is 0.5:1, 0.6:1, 0.7:1, 0.8:1, 0.9:1, 1.0:1, 1.1:1, 1.2:1, 1.3:1, 1.4:1, 1.5:1, and the like. When the second additive includes the silane additives having the structure represented by formula 3 and formula 4 with a mass ratio in the range as defined above, the compounds of formula 1, formula 3 and formula 4 can exhibit further synergistic effect to improve the lithium-conducting performance of the generated SEI membrane and CEI membrane, and the SEI membrane and the CEI membrane are denser and more stable. At the same time, the acidity of the battery is reduced and lithium oxides and peroxide ions are removed from the electrolytic solution, such that the cycling performance and high-temperature performance of the battery is further improved.

In a specific embodiment, the second additive includes the silane additives having the structure represented by formula 2, formula 3 and formula 4, and a mass ratio between the silane additives having the structure represented by formula 2, formula 3 and formula 4 is (0.5-1.5):(0.5-1.5):1; for example, the mass ratio between the silane additives having the structure represented by formula 2, formula 3 and formula 4 is 0.5:0.5:1, 0.6:0.6:1, 0.7:0.7:1, 0.8:0.8:1, 0.9:0.9:1, 1:1:1, 1.1:1.1:1, 1.2:1.2:1, 1.3:1.3:1, 1.4:1.4:1, 1.5:1.5:1, 0.5:1.5:1, 0.5:1:1, 1:0.5:1, 1:1.5:1, 1.5:0.5:1, 1.5:1:1 and the like. When the second additive includes the silane additives having the structure represented by formula 2, formula 3 and formula 4 with a mass ratio in the range as defined above, the compounds of formula 1, formula 2, formula 3 and formula 4 can exhibit further synergistic effect to form an SEI membrane and a CEI membrane with lower impedance. At the same time, the stability of the electrolytic solution is enhanced, and the acidity of the battery is further reduced, such that the battery could exhibit superior cycling performance and high-temperature performance.

In a specific embodiment, the electrolytic solution further includes an auxiliary additive, and the auxiliary additive includes at least one of 1,3-propane sultone (PS), fluoroethylene carbonate (FEC), vinylene carbonate (VC), prop-1-ene-1,3-sultone (PST), tris(trimethylsilyl)phosphate (TMSP), tris(trimethylsilyl)borate (TMSB), ethylene sulfate (DTD), lithium difluorobis(oxalato)phosphate (LiODFP), lithium difluorophosphate (LiPO₂F₂), lithium difluoro(oxalato)borate (LiODFB), or ethylene sulfite (ES). When the above additives are further added to the electrolytic solution, the performance of the SEI membrane is further improved, resulting in lower impedance and a more stable structure of the SEI membrane, so as to further improve the cycling performance and high-temperature performance of the battery.

In a specific embodiment, a mass percentage of the auxiliary additive in the electrolytic solution ranges from 0.03% to 3.2%; for example, the mass percentage of the auxiliary additive in the electrolytic solution is 0.03%, 0.05%, 0.1%, 0.5%, 1%, 1.5%, 2%, 2.5%, 3% or 3.2%. When the mass percentage of the auxiliary additive is within the above range, the auxiliary is able to exhibit further synergistic effect with the first additive and the second additive, such that the performance of the SEI membrane of the battery can be improved, resulting in higher cycling performance and high-temperature performance of the battery.

In a specific embodiment, the electrolytic solution of the present application further includes a lithium salt or a sodium salt. The specific selections of the lithium salt and the sodium salt are not limited in the present application. For example, the lithium salt may include at least one of LiPF₆, LiBF₄, LiFSI, LiTFSI, LiAsF₆, LiClO₄, LiCF₃SO₃, LiBOB, LiTDI, or Li₂PFO₃; the sodium salt may include at least one of sodium perchlorate, sodium bis(oxalato)borate, sodium difluoro(oxalato)borate, sodium bis(trifluoromethanesulfonyl)imide, or sodium bis(fluorosulfonyl)imide. The addition of the lithium salt or sodium salt can enhance the conductivity and stability of the electrolytic solution, thereby improving the cycling performance of the battery. When the electrolytic solution is applied in a lithium ion battery, a mass percentage of the lithium salt in the electrolytic solution ranges from 12% to 18%, e.g., 12%, 13%, 14%, 15%, 16%, 17%, or 18%. When the electrolytic solution is applied in a sodium ion battery, a mass percentage of the sodium salt in the electrolytic solution ranges from 12% to 18%. If the mass percentage of the lithium salt or sodium salt is within the above range, the conductivity and stability of the electrolytic solution can be further improved, thereby improving the cycling performance of the battery to a better extent.

In a specific embodiment, the electrolytic solution of the present application further includes an organic solvent. The organic solvent includes at least one of ethylene carbonate, propylene carbonate, dimethyl carbonate, diethyl carbonate, methyl ethyl carbonate, ethyl propionate, propyl propionate, methyl acetate, ethyl acetate, propyl acetate, or methyl propionate. When the electrolytic solution solvent includes the above solvents, the degree of dissolution of the lithium salt in the electrolytic solution can be increased, and the conductivity of the electrolytic solution can be increased, thereby further improving the cycling performance of the battery. A mass percentage of the organic solvent in the electrolytic solution ranges from 50% to 80%, e.g., 50%, 55%, 60%, 65%, 70%, 75%, or 80%. If the mass percentage of the organic solvent is within the above range, the conductivity of the electrolytic solution can be further improved, thereby improving the cycling performance of the battery to a better extent.

The present application further provides a battery including the aforementioned electrolytic solution. The battery exhibits excellent cycling performance and high-temperature performance.

In a specific embodiment, in addition to the electrolytic solution of the present application, the battery includes a positive electrode plate, a negative electrode plate, and a separator. During the charging and discharging processes, active ions are repeatedly intercalated and de-intercalated between the positive electrode plate and negative electrode plate. The electrolytic solution conducts these ions between the positive electrode plate and negative electrode plate. The separator is positioned between the positive electrode plate and negative electrode plate to prevent a short circuit of the positive electrode and negative electrode while allowing ions to pass through. Specifically:
the positive electrode plate includes a positive electrode current collector, and a positive electrode active substance layer disposed on the surface of positive electrode current collector. The positive electrode active substance layer contains a positive electrode active substance, a mass percentage of element nickel in the positive electrode active substance is greater than or equal to 40%. When the mass percentage of element nickel in the positive electrode active substance is within this range, the positive electrode active substance has a lower cost and a significantly higher gram capacity. However, positive electrode active substance with high nickel content has poor thermal stability, which leads to the transition metal dissolution and microcracking at high temperatures. Applying the aforementioned electrolytic solution enables the formation of a uniform, strong CEI membrane on the surface of the positive electrode active substance *in situ* and forming uniform, strong SEI membrane on the surface of the negative electrode active substance, which can effectively improve the cycling performance of the battery while achieving high capacity at a low cost.

In a specific embodiment, when the battery is a lithium ion battery, the positive electrode active substance includes at least one of lithium cobaltate, lithium iron phosphate and ternary material.

Preferably, the positive electrode active substance satisfies general formula LiₐNi_{b}Co_{c}M1_{d}M2ₑO_{f}R_{g}, 1≤a≤1.2, 0.6<b<1, 0<c<1, 0<d<1, 0≤e≤0.2, b+c+d+e=1, 1≤f≤2, 0≤g≤1, f+g=2; M1 includes Mn and/or Al, M2 includes at least one of Zr, Zn, Cu, Cr, Mg, Fe, V, Ti, Sr, Sb, Y, W or Nb, and R includes at least one of N, F, S, or Cl.

More preferably, the positive electrode active substance includes at least one of LiNi_{0.7}Co_{0.1}Mn_{0.2}O₂ (NCM712), LiNi_{0.8}Co_{0.1}Mn_{0.1}O₂ (NCM811), LiNi_{0.8}Co_{0.15}Al_{0.05}O₂, or LiNi_{0.9}Co_{0.05}Mn_{0.05}O₂.

In a specific embodiment, when the battery is a sodium ion battery, the positive electrode active substance includes at least one of a layered oxide, Prussian white, Prussian blue, or a polyanionic material.

Preferably, the positive electrode active substance includes at least one of Naₓ₁M₁O₂, Naₓ₂M₂[M₃(CN)₆], NaFePO₄, Na₃V₂(PO₄)₃, Na₂M₄P₂O₇, Na₂Fe₂(SO₄)₃, or Na₂M₄(SO₄)₂ ·2H₂O, 0<x₁≤1, M₁ includes at least one of Ni, Co, Mn, Fe or Cu, 0<x₂<6, M₂ includes at least one of Ni, Fe or Mn, M₃ includes at least one of Fe or Mn, and M₄ includes at least one of Fe, Co, Mn or Cu.

More preferably, the positive electrode active substance includes at least one of NaNiO₂, NaFeO₂, Na_{2/3}Ni_{1/3}Mn_{2/3}O₂, or Na_{2/3}Fe_{1/2}Mn_{1/2}O₂.

In a specific embodiment, the positive electrode current collector includes a metal foil or a composite current collector. For example, as a metal foil, an aluminum foil may be used. The composite current collector includes a polymeric matrix, and a metallic layer formed on at least surface of the polymeric matrix. The composite current collector may be formed by depositing a metallic material (e.g., aluminum, aluminum alloy, nickel, nickel alloy, titanium, titanium alloy, silver, or silver alloy) on the polymeric matrix (e.g., a matrix of polypropylene (PP), polyethylene terephthalate (PET), polybutylene terephthalate (PBT), polystyrene (PS), polyethylene (PE), and the like).

In a specific embodiment, the positive electrode active substance layer further includes a binder. The binder includes at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In a specific embodiment, the positive electrode active substance layer further includes a conductive agent. For example, the conductive agent includes at least one of superconducting carbon, acetylene black, carbon black, Ketjen black, carbon dots, carbon nanotubes, graphene, or carbon nanofibers.

The negative electrode plate includes a negative electrode current collector, and a negative electrode active substance layer disposed on the surface of negative electrode current collector. The negative electrode active substance layer contains a negative electrode active substance. The negative electrode active substance includes at least one of artificial graphite, natural graphite, soft carbon, hard carbon, mesocarbon microbead, silicon-based material, tin-based material, or lithium titanate.

In a specific embodiment, the negative electrode active substance layer may further include a binder, a conductive agent, or other auxiliaries. For example, the binder may include at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS). The conductive agent may include at least one of superconducting carbon, acetylene black, carbon black, Ketjen black, carbon dots, single-walled carbon nanotubes, graphene, or carbon nanofibers. The auxiliary may include a thickener, e.g., sodium carboxymethylcellulose (CMC-Na), and the like.

The present application has no particular limitation on the type of the separator, and any separator with porous structure having good chemical stability and mechanical stability may be used. For example, the material of the separator includes at least one of glass fiber, nonwoven fabric, polyethylene, polypropylene or polyvinylidene fluoride. The separator may be a single-layer film or a multilayer composite film.

The battery of the present application may include a single battery, a battery module, and a battery pack.

### Example 1

The electrolytic solution provided in this example includes: a lithium salt, namely, lithium hexafluorophosphate, in a mass percentage of 14.5%; an organic solvent including EC, PC, EMC, and DEC in a mass ratio of EC:PC:EMC:DEC=1.5:1.5:5:5:2; a compound having the structure represented by formula 5 (CAS: 2681338-34-9) in a mass percentage of 0.3%; and tetramethyldivinyl disiloxane in a mass percentage of 0.05%.

The electrolytic solution of this example is prepared by a method including the following steps: the solvents in a mass ratio of EC:PC:EMC:DEC=1.5:1.5:5:2 were mixed uniformly in an argon-filled glove box (moisture < 10 ppm, oxygen < 1 ppm), lithium salts and additives were added to the mixed solvents rapidly. After thorough mixing, the mixture is stirred uniformly to obtain the electrolytic solution.

The electrolytic solution formulations provided in Examples 1-88 and Comparative Examples 1-5 are essentially the same as Example 1, and the specific parameters are shown in Table 1.

**Table 1**

| | First Additive (%) | | Second Additive | | | | | | Third Additive (%) | Lithium Salt (%) | |
|---|---|---|---|---|---|---|---|---|---|---|---|
| | | | Structural Formula of Formula 2 (%) | | Structural Formula of Formula 3 (%) | | Structural Formula of Formula 4 (%) | | | | |
| Example 1 | Formula 5 | 0.3 | Tetramethyld ivinyl Disiloxane | 0.05 | / | / | / | / | / | Lithium Hexafluoro phosphate | 14.5 |
| Example 2 | Formula 5 | 0.3 | Tetramethyld ivinyl Disiloxane | 0.1 | / | / | / | / | / | Lithium Hexafluoro phosphate | 14.5 |
| Example 3 | Formula 5 | 0.3 | Tetramethyld ivinyl Disiloxane | 0.5 | / | / | / | / | / | Lithium Hexafluoro phosphate | 14.5 |
| Example 4 | Formula 5 | 0.3 | Tetramethyld ivinyl Disiloxane | 1 | / | / | / | / | / | Lithium Hexafluoro phosphate | 14.5 |
| Example 5 | Formula 5 | 0.3 | Tetramethyld ivinyl Disiloxane | 2 | / | / | / | / | / | Lithium Hexafluoro phosphate | 14.5 |
| Example 6 | Formula 5 | 0.3 | Tetramethyld ivinyl Disiloxane | 3 | / | / | / | / | / | Lithium Hexafluoro phosphate | 14.5 |
| Example 7 | Formula 5 | 0.3 | Tetramethyld ivinyl Disiloxane | 4 | / | / | / | / | / | Lithium Hexafluoro phosphate | 14.5 |
| Example 8 | Formula 5 | 0.05 | Tetramethyld ivinyl Disiloxane | 0.5 | / | / | / | / | / | Lithium Hexafluoro phosphate | 14.5 |
| Example 9 | Formula 5 | 0.5 | Tetramethyld ivinyl Disiloxane | 0.5 | / | / | / | / | / | Lithium Hexafluoro phosphate | 14.5 |
| Example 10 | Formula 5 | 1 | Tetramethyld ivinyl Disiloxane | 0.5 | / | / | / | / | / | Lithium Hexafluoro phosphate | 14.5 |
| Example 11 | Formula 5 | 2 | Tetramethyld ivinyl Disiloxane | 0.5 | / | / | / | / | / | Lithium Hexafluoro phosphate | 14.5 |
| Example 13 | Formula 5 | 2.5 | Tetramethyld ivinyl Disiloxane | 0.5 | / | / | / | / | / | Lithium Hexafluoro phosphate | 14.5 |
| Example 14 | Formula 5 | 3 | Tetramethyld ivinyl Disiloxane | 0.5 | / | / | / | / | / | Lithium Hexafluoro phosphate | 14.5 |
| Example 15 | Formula 5 | 0.5 | Tetramethyld ivinyl Disiloxane | 0.03 | / | / | / | / | / | Lithium Hexafluoro phosphate | 14.5 |
| Example 16 | Formula 5 | 0.5 | Dimethyltetr avinyl disiloxane | 0.5 | / | / | / | / | / | Lithium Hexafluoro phosphate | 14.5 |
| Example 17 | Formula 5 | 0.5 | 1,3-Bis(fluor omethyl)-1,3 -dimethyl-1,3 -divinyldisilo xane | 0.5 | / | / | / | / | / | Lithium Hexafluoro phosphate | 14.5 |
| Example 18 | Formula 5 | 0.5 | 1,1,3,3-Tetra kis(fluoromet hyl)-1,3-divi nyldisiloxane | 0.5 | / | / | / | / | / | Lithium Hexafluoro phosphate | 14.5 |
| Example 19 | Formula 5 | 0.3 | / | / | Tetravinyl silane | 0.05 | / | / | / | Lithium Hexafluoro phosphate | 14.5 |
| Example 20 | Formula 5 | 0.3 | / | / | Tetravinyl silane | 0.1 | / | / | / | Lithium Hexafluoro phosphate | 14.5 |
| Example 21 | Formula 5 | 0.3 | / | / | Tetravinyl silane | 0.5 | / | / | / | Lithium Hexafluoro phosphate | 14.5 |
| Example 22 | Formula 5 | 0.3 | / | / | Tetravinyl silane | 1 | / | / | / | Lithium Hexafluoro phosphate | 14.5 |
| Example 23 | Formula 5 | 0.3 | / | / | Tetravinyl silane | 2 | / | / | / | Lithium Hexafluoro phosphate | 14.5 |
| Example 24 | Formula 5 | 0.3 | / | / | Tetravinyl silane | 3 | / | / | / | Lithium Hexafluoro phosphate | 14.5 |
| Example 25 | Formula 5 | 0.3 | / | / | Tetravinyl silane | 4 | / | / | / | Lithium Hexafluoro phosphate | 14.5 |
| Example 26 | Formula 5 | 0.3 | / | / | Dimethyld ivinylsilane | 0.5 | / | / | / | Lithium Hexafluoro phosphate | 14.5 |
| Example 27 | Formula 5 | 0.3 | / | / | Trivinylm ethylsilane | 0.5 | / | / | / | Lithium Hexafluoro phosphate | 14.5 |
| Example 28 | Formula 5 | 0.3 | / | / | / | / | Tris(dimethylvin ylsilyl)phosphate | 0.05 | / | Lithium Hexafluoro phosphate | 14.5 |
| Example 29 | Formula 5 | 0.3 | / | / | / | / | Tris(dimethylvin ylsilyl)phosphate | 0.1 | / | Lithium Hexafluoro phosphate | 14.5 |
| Example 30 | Formula 5 | 0.3 | / | / | / | / | Tris(dimethylvin ylsilyl)phosphate | 0.5 | / | Lithium Hexafluoro phosphate | 14.5 |
| Example 31 | Formula 5 | 0.3 | / | / | / | / | Tris(dimethylvin ylsilyl)phosphate | 1 | / | Lithium Hexafluoro phosphate | 14.5 |
| Example 32 | Formula 5 | 0.3 | / | / | / | / | Tris(dimethylvin ylsilyl)phosphate | 2 | / | Lithium Hexafluoro phosphate | 14.5 |
| Example 33 | Formula 5 | 0.3 | / | / | / | / | Tris(dimethylvin ylsilyl)phosphate | 3 | / | Lithium Hexafluoro phosphate | 14.5 |
| Example 34 | Formula 5 | 0.3 | / | / | / | / | Tris(dimethylvin ylsilyl)phosphate | 4 | / | Lithium Hexafluoro phosphate | 14.5 |
| Example 35 | Formula 5 | 0.3 | / | / | / | / | Bis(dimethyl(vin yl)silyl) methyl phosphate | 0.5 | / | Lithium Hexafluoro phosphate | 14.5 |
| Example 36 | Formula 5 | 0.3 | / | / | / | / | Tris(ethoxydimet hylsilyl) phosphate | 0.5 | / | Lithium Hexafluoro phosphate | 14.5 |
| Example 37 | Formula 5 | 0.3 | / | / | / | / | Bis(ethoxydimeth ylsilyl) methyl phosphate | 0.5 | / | Lithium Hexafluoro phosphate | 14.5 |
| Example 38 | Formula 5 | 0.3 | Tetramethyld ivinyl Disiloxane | 0.2 | Tetravinyl silane | 0.2 | / | / | / | Lithium Hexafluoro phosphate | 14.5 |
| Example 39 | Formula 5 | 0.3 | Tetramethyld ivinyl Disiloxane | 0.3 | Tetravinyl silane | 0.2 | / | / | / | Lithium Hexafluoro phosphate | 14.5 |
| Example 40 | Formula 5 | 0.3 | Tetramethyld ivinyl Disiloxane | 0.1 | Tetravinyl silane | 3 | / | / | / | Lithium Hexafluoro phosphate | 14.5 |
| Example 41 | Formula 5 | 0.3 | Tetramethyld ivinyl Disiloxane | 0.2 | / | / | Tris(dimethylvin ylsilyl)phosphate | 0.2 | / | Lithium Hexafluoro phosphate | 14.5 |
| Example 42 | Formula 5 | 0.3 | Tetramethyld ivinyl Disiloxane | 0.3 | / | / | Tris(dimethylvin ylsilyl)phosphate | 0.2 | / | Lithium Hexafluoro phosphate | 14.5 |
| Example 43 | Formula 5 | 0.3 | Tetramethyld ivinyl Disiloxane | 0.1 | / | / | Tris(dimethylvin ylsilyl)phosphate | 3 | / | Lithium Hexafluoro phosphate | 14.5 |
| Example 44 | Formula 5 | 0.3 | / | / | Tetravinyl silane | 0.2 | Tris(dimethylvin ylsilyl)phosphate | 0.2 | / | Lithium Hexafluoro phosphate | 14.5 |
| Example 45 | Formula 5 | 0.3 | / | / | Tetravinyl silane | 0.3 | Tris(dimethylvin ylsilyl)phosphate | 0.2 | / | Lithium Hexafluoro phosphate | 14.5 |
| Example 46 | Formula 5 | 0.3 | / | / | Tetravinyl silane | 0.1 | Tris(dimethylvin ylsilyl)phosphate | 3 | / | Lithium Hexafluoro phosphate | 14.5 |
| Example 47 | Formula 5 | 0.3 | Tetramethyld ivinyl Disiloxane | 0.3 | Tetravinyl silane | 0.1 | Tris(dimethylvin ylsilyl)phosphate | 0.1 | / | Lithium Hexafluoro phosphate | 14.5 |
| Example 48 | Formula 5 | 0.3 | Tetramethyld ivinyl Disiloxane | 0.3 | Tetravinyl silane | 0.2 | Tris(dimethylvin ylsilyl)phosphate | 0.2 | / | Lithium Hexafluoro phosphate | 14.5 |
| Example 49 | Formula 5 | 0.3 | Tetramethyld ivinyl Disiloxane | 0.3 | / | / | / | / | PS, 1; FEC, 1; VC, 0.5 | Lithium Hexafluoro phosphate | 14.5 |
| Example 50 | Formula 5 | 0.3 | Tetramethyld ivinyl Disiloxane | 0.2 | / | / | / | / | PS, 1; FEC, 1; VC, 0.5 | Lithium Hexafluoro phosphate | 14.5 |
| Example 51 | Formula 5 | 0.3 | Tetramethyld ivinyl Disiloxane | 0.5 | / | / | / | / | PS, 1; FEC, 1; VC, 0.5 | Lithium Hexafluoro phosphate | 14.5 |
| Example 52 | Formula 5 | 0.3 | Tetramethyld ivinyl Disiloxane | 1 | / | / | / | / | PS, 1; FEC, 1; VC, 0.5 | Lithium Hexafluoro phosphate | 14.5 |
| Example 53 | Formula 5 | 0.3 | Tetramethyld ivinyl Disiloxane | 2 | / | / | / | / | PS, 1; FEC, 1; VC, 0.5 | Lithium Hexafluoro phosphate | 14.5 |
| Example 54 | Formula 5 | 0.3 | Tetramethyld ivinyl Disiloxane | 3 | / | / | / | / | PS, 1; FEC, 1; VC, 0.5 | Lithium Hexafluoro phosphate | 14.5 |
| Example 55 | Formula 5 | 0.5 | Tetramethyld ivinyl Disiloxane | 0.5 | / | / | / | / | PS, 1; FEC, 1; VC, 0.5 | Lithium Hexafluoro phosphate | 14.5 |
| Example 56 | Formula 5 | 1 | Tetramethyld ivinyl Disiloxane | 0.5 | / | / | / | / | PS, 1; FEC, 1; VC, 0.5 | Lithium Hexafluoro phosphate | 14.5 |
| Example 57 | Formula 5 | 2 | Tetramethyld ivinyl Disiloxane | 0.5 | / | / | / | / | PS, 1; FEC, 1; VC, 0.5 | Lithium Hexafluoro phosphate | 14.5 |
| Example 58 | Formula 5 | 0.05 | Tetramethyld ivinyl Disiloxane | 0.5 | / | / | / | / | PS, 1; FEC, 1; VC, 0.5 | Lithium Hexafluoro phosphate | 14.5 |
| Example 59 | Formula 5 | 2.5 | Tetramethyld ivinyl Disiloxane | 0.5 | / | / | / | / | PS, 1; FEC, 1; VC, 0.5 | Lithium Hexafluoro phosphate | 14.5 |
| Example 60 | Formula 5 | 0.3 | / | / | Tetravinyl silane | 0.5 | / | / | PS, 1; FEC, 1; VC, 0.5 | Lithium Hexafluoro phosphate | 14.5 |
| Example 61 | Formula 5 | 0.3 | / | / | Tetravinyl silane | 1 | / | / | PS, 1; FEC, 1; VC, 0.6 | Lithium Hexafluoro phosphate | 14.5 |
| Example 62 | Formula 5 | 0.3 | / | / | / | / | Tris(dimethylvin ylsilyl)phosphate | 0.5 | PS, 1; FEC, 1; VC, 0.7 | Lithium Hexafluoro phosphate | 14.5 |
| Example 63 | Formula 5 | 0.3 | / | / | / | / | Tris(dimethylvin ylsilyl)phosphate | 1 | PS, 1; FEC, 1; VC, 0.8 | Lithium Hexafluoro phosphate | 14.5 |
| Example 64 | Formula 5 | 0.3 | Tetramethyld ivinyl Disiloxane | 0.3 | Tetravinyl silane | 0.1 | Tris(dimethylvin ylsilyl)phosphate | 0.1 | PS, 1; FEC, 1; VC, 0.9 | Lithium Hexafluoro phosphate | 14.5 |
| Example 65 | Formula 5 | 0.3 | Tetramethyld ivinyl Disiloxane | 0.3 | Tetravinyl silane | 0.2 | Tris(dimethylvin ylsilyl)phosphate | 0.2 | PS, 1; FEC, 1; VC, 0.10 | Lithium Hexafluoro phosphate | 14.5 |
| Example 66 | Formula 5 | 0.3 | Tetramethyld ivinyl Disiloxane | 0.5 | / | / | / | / | PS, 0.5; FEC, 1; VC, 0.5 | Lithium Hexafluoro phosphate | 14.5 |
| Example 67 | Formula 5 | 0.3 | Tetramethyld ivinyl Disiloxane | 0.5 | / | / | / | / | PS, 1; DTD, 1; VC, 0.5 | Lithium Hexafluoro phosphate | 14.5 |
| Example 68 | Formula 5 | 0.3 | Tetramethyld ivinyl Disiloxane | 0.5 | / | / | / | / | PS, 1; DTD, 1; VC, 0.3 | Lithium Hexafluoro phosphate | 14.5 |
| Example 69 | Formula 5 | 0.3 | Tetramethyld ivinyl Disiloxane | 0.5 | / | / | / | / | PST, 0.5; TMSB, 0.3; LiODFP, 0.3 | Lithium Hexafluoro phosphate | 14.5 |
| Example 70 | Formula 5 | 0.3 | Tetramethyld ivinyl Disiloxane | 0.5 | / | / | / | / | PS, 1; ES, 0.3; LiODFB, 0.3 | Lithium Hexafluoro phosphate | 14.5 |
| Example 71 | Formula 5 | 0.3 | Tetramethyld ivinyl Disiloxane | 0.5 | / | / | / | / | PST, 0.5; TMSB, 0.3; LiPO₂F₂, 0.3 | Lithium Hexafluoro phosphate | 14.5 |
| Example 72 | Formula 5 | 0.3 | Tetramethyld ivinyl Disiloxane | 0.5 | / | / | / | / | PS, 1; FEC, 1; VC, 0.5 | Lithium Hexafluoro phosphate | 12 |
| Example 73 | Formula 5 | 0.3 | Tetramethyld ivinyl Disiloxane | 0.5 | / | / | / | / | PS, 1; FEC, 1; VC, 0.6 | Lithium Hexafluoro phosphate | 18 |
| Example 74 | Formula 5 | 0.3 | Tetramethyld ivinyl Disiloxane | 0.5 | / | / | / | / | PS, 1; FEC, 1; VC, 0.6 | Lithium Hexafluoro phosphate | 20 |
| Example 75 | Formula 5 | 0.3 | Tetramethyld ivinyl Disiloxane | 0.5 | / | / | / | / | PS, 1.2; FEC, 1; VC, 1 | Lithium Hexafluoro phosphate | 14.5 |
| Example 76 | Formula 5 | 0.3 | Tetramethyld ivinyl Disiloxane | 0.5 | / | / | / | / | PS, 1.2; FEC, 1; VC, 1 | Sodium Hexafluoro phosphate | 14.5 |
| Example 77 | Formula 5 | 0.1 | Tetramethyld ivinyl Disiloxane | 0.5 | / | / | / | / | / | Lithium Hexafluoro phosphate | 14.5 |
| Example 78 | Formula 5 | 4 | Tetramethyld ivinyl Disiloxane | 0.5 | / | / | / | / | / | Lithium Hexafluoro phosphate | 14.5 |
| Example 79 | Formula 5 | 0.3 | Tetramethyld ivinyl Disiloxane | 0.4 | Tetravinyl silane | 0.2 | / | / | / | Lithium Hexafluoro phosphate | 14.5 |
| Example 80 | Formula 5 | 0.3 | Tetramethyld ivinyl Disiloxane | 0.1 | / | / | Tris(dimethylvin ylsilyl)phosphate | 0.2 | / | Lithium Hexafluoro phosphate | 14.5 |
| Example 81 | Formula 5 | 0.3 | / | / | Tetravinyl silane | 0.1 | Tris(dimethylvin ylsilyl)phosphate | 0.2 | / | Lithium Hexafluoro phosphate | 14.5 |
| Example 82 | Formula 5 | 0.3 | Tetramethyld ivinyl Disiloxane | 0.5 | / | / | / | / | VC, 0.03 | Lithium Hexafluoro phosphate | 14.5 |
| Example 83 | Formula 5 | 0.3 | Tetramethyld ivinyl Disiloxane | 0.5 | / | / | / | / | PS, 1; FEC, 1; VC, 1 | Lithium Hexafluoro phosphate | 14.5 |
| Example 84 | Formula 6 | 0.3 | Tetramethyld ivinyl Disiloxane | 0.5 | / | / | / | / | / | Lithium Hexafluoro phosphate | 14.5 |
| Example 85 | Formula 7 | 0.3 | Tetramethyld ivinyl Disiloxane | 0.5 | / | / | / | / | / | Lithium Hexafluoro phosphate | 14.5 |
| Example 86 | Formula 8 | 0.3 | Tetramethyld ivinyl Disiloxane | 0.5 | / | / | / | / | / | Lithium Hexafluoro phosphate | 14.5 |
| Example 87 | Formula 6 | 0.3 | Tetramethyld ivinyl Disiloxane | 0.3 | Tetravinyl silane | 0.2 | Tris(dimethylvin ylsilyl)phosphate | 0.2 | PS, 1; FEC, 1; VC, 0.10 | Lithium Hexafluoro phosphate | 14.5 |
| Example 88 | Formula 7 | 0.3 | Tetramethyld ivinyl Disiloxane | 0.3 | Tetravinyl silane | 0.2 | Tris(dimethylvin ylsilyl)phosphate | 0.2 | PS, 1; FEC, 1; VC, 0.10 | Lithium Hexafluoro phosphate | 14.5 |
| Compara tive Example 1 | Formula 5 | 0.3 | / | / | / | / | / | / | / | Lithium Hexafluoro phosphate | 14.5 |
| Compara tive Example 2 | / | / | Tetramethyld ivinyl Disiloxane | 0.5 | / | / | / | / | / | Lithium Hexafluoro phosphate | 14.5 |
| Compara tive Example 3 | / | / | / | / | Tetravinyl silane | 0.5 | / | / | / | Lithium Hexafluoro phosphate | 14.5 |
| Compara tive Example 4 | / | / | / | / | / | / | Tris(dimethylvin ylsilyl)phosphate | 0.5 | / | Lithium Hexafluoro phosphate | 14.5 |
| Compara tive Example 5 | / | / | / | / | / | / | / | / | PS, 1; FEC, 1; VC, 0.5 | Lithium Hexafluoro phosphate | 14.5 |

| | | | | | | | | | | | |
|---|---|---|---|---|---|---|---|---|---|---|---|
| Note: "/" in Table 1 indicates that the corresponding substance or parameter does not exist. | | | | | | | | | | | |

### Test Example 1

Preparation of positive electrode plate: Positive electrode active substance NCM811, binder polyvinylidene fluoride (PVDF) and conductive agent acetylene black were mixed in a weight ratio of 96.5:2:1.5. Then, N-methylpyrrolidone (NMP) was added and the mixture was stirred using a vacuum mixer until the mixed system became a positive electrode slurry with homogeneous fluidity. This positive slurry was then uniformly coated onto a 7 µm-thick aluminum foil, and the aluminum foil coated with the positive electrode slurry was subsequently dried in an oven at 120 °C for 8 hours. Finally, the resultant was rolled and the compacted density of positive electrode plate was controlled to be 3.5 g/cm³, after which it was slit to obtain the positive electrode plate.

Preparation of negative electrode plate: The negative electrode active material artificial graphite, thickener sodium carboxymethyl cellulose (CMC-Na), binder styrene-butadiene rubber, and conductive agent acetylene black and conductive agent single-walled carbon nanotube were mixed in a weight ratio of 95.9:1:2:1:0.1. Deionized water was then added to form a negative electrode slurry using a vacuum mixer. The negative electrode slurry was uniformly coated onto a 6 µm-thick copper foil. The copper foil coated with the negative electrode slurry was dried at 85 °C for 5 hours. Finally, the resultant was rolled and the compacted density of the negative electrode plate was controlled to be 1.5 g/cm³, after which it was slit to obtain the negative electrode plate.

A polyethylene separator with a thickness of 8 µm was chosen.

Preparation of lithium ion battery: The positive electrode plate, separator, and negative electrode plate prepared as described above were subjected to winding to obtain a bare cell not injected with liquid. The bare cell was placed in an outer package, and the electrolytic solution of Examples 1-75, Examples 77-88, and Comparative Examples 1-5 as described above were injected respectively into the dried bare cell, and the lithium ion battery was obtained after processes such as vacuum encapsulation, resting, formation, shaping, and sorting.

### Test Example 2

Preparation of positive electrode plate: Positive electrode active substance Na[Ni_{1/3}Fe_{1/3}Mn_{1/3}]O₂, binder carbon black and carbon nanotube, and conductive agent polyvinylidene fluoride (PVDF) were mixed in a weight ratio of 94.5:3.5:1.8:0.2. Then, N-methylpyrrolidone (NMP) was added and the mixture was stirred using a vacuum mixer until the mixed system became a positive electrode slurry with homogeneous fluidity. This positive slurry was then uniformly coated onto a 7 µm-thick aluminum foil, and the aluminum foil coated with the positive electrode slurry was subsequently dried in an oven at 120 °C for 8 hours. Finally, the resultant was rolled and the compacted density of positive electrode plate was controlled to be 3.5 g/cm³, after which it was slit to obtain the positive electrode plate.

Preparation of negative electrode plate: The negative electrode active substance hard carbon, thickener (CMC), binder styrene-butadiene rubber, and conductive agent acetylene black were mixed in a weight ratio of 95:2:1.5:1.5. Deionized water was then added to form a negative electrode slurry using a vacuum mixer. The negative electrode slurry was uniformly coated onto a 6 µm-thick copper foil. The copper foil coated with the negative electrode slurry was dried at 85 °C for 5 hours. Finally, the resultant was rolled and the compacted density of the negative electrode plate was controlled to be 1.5 g/cm³, after which it was slit to obtain the negative electrode plate.

A polyethylene separator with a thickness of 8 µm was chosen.

Preparation of sodium ion battery: The positive electrode plate, separator, and negative electrode plate prepared as described above were subjected to winding to obtain a bare cell not injected with liquid. The bare cell was placed in an outer package, and the electrolytic solution of Example 76 as described above were injected into the dried bare cell, and the sodium ion battery was obtained after processes such as vacuum encapsulation, resting, formation, shaping, and sorting.

### Test Example 3

The batteries of Examples 1-88 and Comparative Examples 1-5 were subjected to tests of electrochemical performance, and the test results are shown in Table 2.
1. Storage Test at 60 °C: The battery was placed in an environment at 25 °C and discharged at a constant current of 1 C to a cut-off voltage of 2.5 V, after a 5-minute rest, charged at a constant current of 1 C and a constant voltage to an upper limit voltage of 4.5 V, with a cut-off current of 0.05 C. The initially fully charged soft pack battery was submerged in liquid and the mass m₁ of the discharged liquid was calculated using the drainage method. The battery was then placed in a 60 °C high-temperature box and rest for 20 days, and then the mass m₂ of the discharged liquid of the battery was measured. The calculation formula is as follows: Gas Generation Amount (mL) = (m₂ - m₁) / ρ.
2. Cycling Test at Room Temperature (25 °C): The battery was placed in an environment at 25 °C, after a 3-hour rest, and then charged at a constant current of 1 C and a constant voltage to an upper limit voltage of 4.5 V, with a cut-off current of 0.05 C. The battery was rest for 5 minutes after being full charged, and then discharged to the cut-off voltage of 2.5 V at a constant current of 1 C. The highest discharge capacity of the first three cycles was recorded as the initial capacity Q₁. The final discharge capacity Q₂ of the battery was recorded when it reached 500 cycles. The calculation formula is as follows: Capacity Retention Rate (%) = Q₂/Q₁ ×100%.

**Table 2**

| | Gas Generation Amount when Stored at 60 °C (mL) | Capacity Retention Rate after 500 Cycles at 25 °C and 1C/1C / % |
|---|---|---|
| Example 1 | 7.2 | 86.3 |
| Example 2 | 6.8 | 87.1 |
| Example 3 | 4.5 | 89.3 |
| Example 4 | 5.2 | 88.9 |
| Example 5 | 5.8 | 88.5 |
| Example 6 | 6.5 | 87.6 |
| Example 7 | 7.5 | 82.0 |
| Example 8 | 8.1 | 80.6 |
| Example 9 | 4.5 | 90.1 |
| Example 10 | 4.9 | 88.1 |
| Example 11 | 5.2 | 86.4 |
| Example 13 | 6.5 | 82.7 |
| Example 14 | 6.1 | 80.4 |
| Example 15 | 8.5 | 78.2 |
| Example 16 | 5.8 | 87.6 |
| Example 17 | 4.9 | 88.9 |
| Example 18 | 5.2 | 86.7 |
| Example 19 | 7.8 | 84.3 |
| Example 20 | 7.6 | 86.2 |
| Example 21 | 4.5 | 91.2 |
| Example 22 | 5.7 | 87.7 |
| Example 23 | 6.7 | 85.3 |
| Example 24 | 7.3 | 83.2 |
| Example 25 | 9.4 | 82.5 |
| Example 26 | 6.5 | 83.9 |
| Example 27 | 6.1 | 83.5 |
| Example 28 | 8.5 | 82.8 |
| Example 29 | 7.8 | 83.8 |
| Example 30 | 7.1 | 88.6 |
| Example 31 | 5.5 | 89.7 |
| Example 32 | 8.3 | 87.2 |
| Example 33 | 8.9 | 86.6 |
| Example 34 | 9.7 | 81.6 |
| Example 35 | 8.0 | 87.9 |
| Example 36 | 8.5 | 87.5 |
| Example 37 | 8.9 | 87.0 |
| Example 38 | 4.8 | 89.3 |
| Example 39 | 3.7 | 90.7 |
| Example 40 | 4.8 | 85.3 |
| Example 41 | 5.2 | 89.7 |
| Example 42 | 4.6 | 90.4 |
| Example 43 | 6.6 | 82.5 |
| Example 44 | 5.2 | 89.5 |
| Example 45 | 3.8 | 91.9 |
| Example 46 | 6.6 | 81.2 |
| Example 47 | 4.5 | 85.5 |
| Example 48 | 2.5 | 93.4 |
| Example 49 | 5.5 | 89.3 |
| Example 50 | 6.4 | 88.1 |
| Example 51 | 4.1 | 91.5 |
| Example 52 | 4.9 | 89.5 |
| Example 53 | 5.3 | 89 |
| Example 54 | 5.7 | 88.2 |
| Example 55 | 4.0 | 91.3 |
| Example 56 | 4.5 | 89.2 |
| Example 57 | 4.9 | 87.9 |
| Example 58 | 4.1 | 89.5 |
| Example 59 | 4.8 | 89 |
| Example 60 | 4.0 | 92.2 |
| Example 61 | 5.3 | 88.4 |
| Example 62 | 6.5 | 88.3 |
| Example 63 | 4.1 | 91.3 |
| Example 64 | 3.9 | 90.5 |
| Example 65 | 2.0 | 94.6 |
| Example 66 | 4.1 | 90.1 |
| Example 67 | 3.9 | 89.8 |
| Example 68 | 3.8 | 90.3 |
| Example 69 | 3.7 | 89.7 |
| Example 70 | 4.2 | 89.9 |
| Example 71 | 4.0 | 90.2 |
| Example 72 | 5.3 | 89.3 |
| Example 73 | 6.8 | 86.1 |
| Example 74 | 9.7 | 85.4 |
| Example 75 | 3.6 | 90.4 |
| Example 76 | 5.5 | 85 |
| Example 77 | 6.5 | 83.2 |
| Example 78 | 6.5 | 78 |
| Example 79 | 4.1 | 89.8 |
| Example 80 | 5.8 | 85.1 |
| Example 81 | 5.7 | 83.6 |
| Example 82 | 4.1 | 89.7 |
| Example 83 | 4.2 | 91.3 |
| Example 84 | 4.7 | 89.1 |
| Example 85 | 4.9 | 88.7 |
| Example 86 | 4.7 | 89.2 |
| Example 87 | 2.6 | 92.5 |
| Example 88 | 2.9 | 92.1 |
| Comparative Example 1 | 10.6 | 75.6 |
| Comparative Example 2 | 7.4 | 70.9 |
| Comparative Example 3 | 8.3 | 70.1 |
| Comparative Example 4 | 8.7 | 70.6 |
| Comparative Example 5 | 13.4 | 60.2 |

As can be seen from Table 2, comparisons of Examples 1-48, 77-81 and 84-86 and Comparative Examples 1-4, as well as comparisons of Examples 49-65 and Comparative Example 5, show that the first additive and the second additive work synergistically, resulting in improved cycling performance and high-temperature performance of the battery. Further, comparisons of Examples 66-71, 75, 82 and 83 show that the introduction of a third additive can further enhance the cycling performance and high-temperature performance of the battery. Comparison of Examples 72-74 shows that when the mass percentage of the lithium salt is in the range of 12% to 18%, the cycling performance and high-temperature performance of the battery can be further enhanced. To sum up, the electrolytic solution provided by the present application is able to improve the cycling performance and high-temperature performance of the battery.

Finally, it should be noted that the above examples are intended to illustrate, rather than limit, the technical solutions of the present application. Although the present application has been described in detail with reference to the foregoing examples, a person of ordinary skills in the art should understand that they can still modify the technical solutions recorded therein, or substitute some or all of the technical features with equivalent features. Such modifications or substitutions do not take the essence of the corresponding technical solutions out of the scope of the examples of the present application.

## Claims

1. An additive composition, comprising a first additive and a second additive; and the first additive comprises a compound having a structure represented by formula 1: 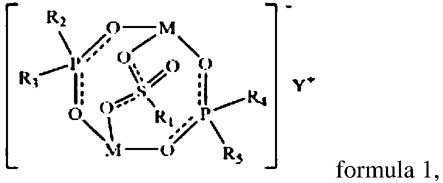
wherein R₁ is selected from the group consisting of -R and -OR, and R is selected from the group consisting of substituted or unsubstituted C₁-C₇ alkyl, substituted or unsubstituted C₂-C₇ alkenyl, and substituted or unsubstituted C₂-C₆ alkynyl; R₂ to R₃ are each independently selected from the group consisting of halogen and substituted or unsubstituted C₁-C₆ alkyl; M is an alkali metal; and Y⁺ is a monovalent cation; and
the second additive comprises a silane additive.

2. The additive composition according to claim 1, wherein the silane additive comprises an unsaturated bond.

3. The additive composition according to claim 2, wherein the second additive comprises at least one of silane additives having a structure represented by formula 2, formula 3, or formula 4: 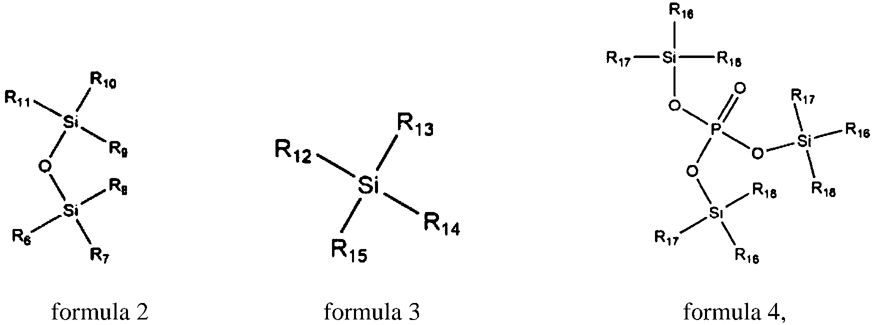
wherein, R₆ to R₁₁ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; a substituent in each of R₆ to R₁₁ comprises one of halogen, amino or hydroxyl, and the silane additive having the structure represented by formula 2 comprises at least two degrees of unsaturation;
R₁₂ to R₁₅ are each independently selected from the group consisting of substituted or unsubstituted C₁-C₁₂ alkyl, substituted or unsubstituted C₂-C₁₂ alkenyl, substituted or unsubstituted C₂-C₁₂ alkynyl, substituted or unsubstituted C₁-C₁₂ alkoxy, substituted or unsubstituted C₆-C₁₂ aryl, and substituted or unsubstituted C₆-C₁₂ aryloxy; a substituent in each of R₁₂ to R₁₅ comprises one of halogen or hydroxyl, and the silane additive having the structure represented by formula 3 comprises at least two degrees of unsaturation; and
R₁₆, R₁₇, and R₁₈ are each independently selected from the group consisting of vinyl, methoxyethyl, and substituted or unsubstituted C₁-C₅ alkyl, and the silane additive having the structure represented by formula 4 comprises at least three degrees of unsaturation.

4. The additive composition according to any one of claims 1 to 3, wherein R₁ is selected from the group consisting of substituted or unsubstituted C₁-C₆ acyclic alkyl and substituted or unsubstituted C₂-C₆ acyclic alkenyl; R₂ to R₃ comprise at least one halogen; M is selected from the group consisting of Li, Na, and K; Y⁺ is N⁺RₐR_{b}R_{c}R_{d}, wherein Rₐ to R_{d} are each independently selected from the group consisting of H, halogen, substituted or unsubstituted C₁-C₇ alkyl, substituted or unsubstituted C₂-C₇ alkenyl, and substituted or unsubstituted C₂-C₆ alkynyl, and Rₐ to R_{d} comprise at least one hydrogen.

5. The additive composition according to claim 4, wherein R₁ is substituted or unsubstituted C₂-C₆ acyclic alkenyl; R₂ to R₅ are each independently halogen; M is Li; Y⁺ is N⁺RₐR_{b}R_{c}R_{d}, and wherein Rₐ is hydrogen, and R_{b} to R_{d} are each independently C₁-C₃ alkyl.

6. The additive composition according to any one of claims 2, 3 and 5, wherein R₆ to R₁₁ comprise at least two carbon-carbon double bonds; and/or
R₁₂ to R₁₅ comprise at least two carbon-carbon double bonds; and/or
the silane additive having the structure represented by formula 4 comprises at least three carbon-carbon double bonds.

7. The additive composition according to any one of claims 1-3 and 5, wherein the first additive comprises a compound having a structure represented by formula 5 to formula 8:

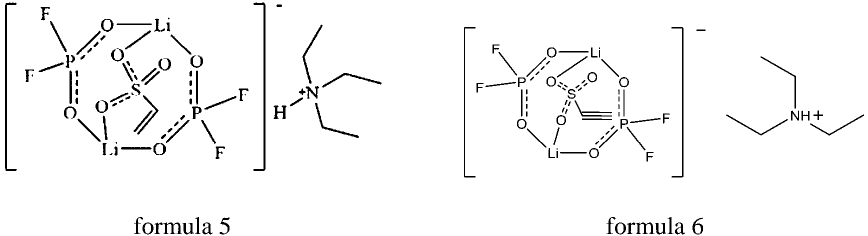

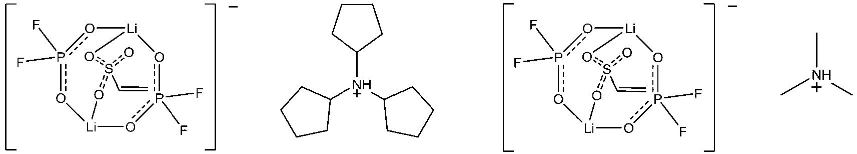

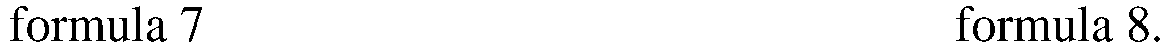

8. The additive composition according to claim 7, wherein the silane additive having the structure represented by formula 2 comprises at least one of tetramethyldivinyl disiloxane, dimethyltetravinyl disiloxane, 1,3-bis(fluoromethyl)-1,3-dimethyl-1,3-divinyldisiloxane, or 1,1,3,3-tetrakis(fluoromethyl)-1,3-divinyldisiloxane; and/or
the silane additive having the structure represented by formula 3 comprises at least one of dimethyldivinylsilane, trivinylmethylsilane, or tetravinylsilane; and/or
the silane additive having the structure represented by formula 4 comprises at least one of tris(dimethylvinylsilyl)phosphate, bis(dimethyl(vinyl)silyl) methyl phosphate, tris(ethoxydimethylsilyl) phosphate, bis(ethoxydimethylsilyl) methyl phosphate, tetrakis(dimethyl(vinyl)silyl) diphosphate, or tetrakis((2-methoxyethyl)dimethylsilyl) diphosphate.

9. An electrolytic solution, comprising a lithium salt or a sodium salt, an organic solvent, and the additive composition according to any one of claims 1 to 8.

10. The electrolytic solution according to claim 9, wherein a mass percentage of the first additive in the electrolytic solution ranges from 0.1% to 3%; and/or
a mass percentage of the second additive in the electrolytic solution ranges from 0.03% to 3%.

11. The electrolytic solution according to claim 9 or 10, wherein the second additive comprises the silane additives having the structure represented by formula 2 and formula 3, and a mass ratio between the silane additives having the structure represented by formula 2 and formula 3 is (1.5 to 2.0):1; and/or
the second additive comprises the silane additives having the structure represented by formula 2 and formula 4, and a mass ratio between the silane additives having the structure represented by formula 2 and formula 4 is (0.5 to 1.5):1; and/or
the second additive comprises the silane additives having the structure represented by formula 3 and formula 4, and a mass ratio between the silane additives having the structure represented by formula 3 and formula 4 is (0.5 to 1.5):1; and/or
the second additive comprises the silane additives having the structure represented by formula 2, formula 3 and formula 4, and a mass ratio between the silane additives having the structure represented by formula 2, formula 3 and formula 4 is (0.5 to 1.5):(0.5 to 1.5):1.

12. The electrolytic solution according to any one of claims 9 to 11, wherein the electrolytic solution further comprises an auxiliary additive, and the auxiliary additive comprises at least one of 1,3-propane sultone, fluoroethylene carbonate, vinylene carbonate, prop-1-ene-1,3-sultone, tris(trimethylsilyl)phosphate, tris(trimethylsilyl)borate, ethylene sulfate, lithium difluorobis(oxalato)phosphate, lithium difluorophosphate, lithium difluoro(oxalato)borate, or ethylene sulfite; and
a mass percentage of the auxiliary additive in the electrolytic solution ranges from 0.03% to 3.2%.

13. A battery, comprising the electrolytic solution according to any one of claims 9 to 12.

14. The battery according to claim 13, wherein the battery further comprises a positive electrode active substance and a negative electrode active substance, wherein the positive electrode active substance comprises at least one of lithium cobaltate, lithium iron phosphate or ternary material; or, the positive electrode active substance comprises at least one of a layered oxide, Prussian white, Prussian blue, or a polyanionic material; and
the negative electrode active substance comprises at least one of artificial graphite, natural graphite, soft carbon, hard carbon, mesocarbon microbead, silicon-based material, tin-based material, or lithium titanate.
